Europäisches Patentamt

European Patent Office

Office européen des brevets

(11) Numéro de publication : **0 091 701**
**B1**

(12) FASCICULE DE BREVET EUROPÉEN

(45) Date de publication du fascicule du brevet :
18.09.85

(21) Numéro de dépôt : 83200229.9

(22) Date de dépôt : 15.02.83

(51) Int. Cl.⁴ : **C 09 K  5/06**

(54) **Mélange pour la préparation de compositions pour l'absorption et l'accumulation de calories.**

(30) Priorité : 23.02.82 FR 8203101

(43) Date de publication de la demande :
19.10.83 Bulletin 83/42

(45) Mention de la délivrance du brevet :
18.09.85 Bulletin 85/38

(84) Etats contractants désignés :
AT BE CH DE FR GB IT LI LU NL SE

(56) Documents cités :
EP-A- 0 005 362
EP-A- 0 019 573

(73) Titulaire : **SOLVAY & Cie (Société Anonyme)**
**Rue du Prince Albert, 33**
**B-1050 Bruxelles (BE)**

(72) Inventeur : **Demilie, Paul**
**Avenue Paule, 18**
**B-1150 Bruxelles (BE)**
Inventeur : **Mathis, Pierre**
**Rue Laennec, 1**
**F-54110 Dombasle-sur-Meurthe (FR)**

## Description

La présente invention se rapporte à un mélange pour la préparation de compositions pour l'absorption et l'accumulation de calories qui comprennent un sel hydraté tel que l'hexahydrate de chlorure de calcium et des particules d'un agent stabilisant.

On a déjà proposé d'exploiter la chaleur latente de changement de phase de certains composés, de préférence ceux ayant une température de fusion située dans une plage de 15 à 35 °C, pour absorber et accumuler des calories. Ainsi, dans la demande de brevet FR-A-2 457 230 (A.N.V.A.R.), on a proposé des compositions comprenant en combinaison un hydrate d'un sel, et plus particulièrement l'hexahydrate de chlorure de calcium, un agent nucléant de cet hydrate et une poudre stabilisante composée d'un mélange de diatomites ayant un indice de vide supérieur à 5. Ces compositions sont préparées en partant de chlorure de calcium industriel vendu sous forme de paillettes de mono- et de dihydrate de chlorure de calcium selon une technique qui consiste à ajouter à ces paillettes environ 55 g d'eau par 100 g de paillettes, à saturer la solution formée à 30 °C, à vérifier la teneur en eau et à incorporer ensuite à la solution la poudre stabilisante en brassant le mélange jusqu'à consistance pâteuse. On peut aussi partir d'une saumure de chlorure de calcium que l'on enrichit par dissolution de paillettes de chlorure de calcium industriel avant d'y incorporer la poudre stabilisante. Dans tous les cas, on obtient finalement des compositions pâteuses que l'on introduit dans des enveloppes étanches non conductrices de l'électricité de façon à permettre leur transport. En effet, le transport des compositions elles-mêmes jusqu'au site d'exploitation et leur conditionnement sur place ne sont pas envisageables en pratique car elles se solidifient aux températures inférieures à 28 °C. Il est donc exclu de les transporter sous une forme non conditionnée et de les mettre en œuvre dans des enveloppes de trop grandes dimensions, qui ne seraient pas transportables.

L'invention a pour but de fournir un mélange pour fabriquer des compositions telles que celles décrites ci-avant qui soit facilement transportable et qui permette la préparation aisée des compositions sur le site d'exploitation ainsi que leur conditionnement sur le site d'exploitation dans des enveloppes de n'importe quelle dimension. De plus, l'invention présente l'avantage que le transport du mélange est très aisé puisqu'il s'agit d'un mélange pulvérulent et peu coûteux puisqu'on évite le transport de grandes quantités d'eau.

L'invention concerne à cet effet un mélange, pour la préparation de compositions pour l'absorption et l'accumulation de calories qui comprennent un sel hydraté et une poudre stabilisante, qui contient des particules de sel se trouvant sous une forme hydratable présentant un diamètre moyen inférieur à 1 mm ainsi que la poudre stabilisante.

N'importe quel sel hydratable, qu'il soit anhydre ou hydraté mais encore hydratable à un degré supérieur d'hydratation, peut être utilisé pour constituer le mélange selon l'invention pour autant qu'il soit solide dans les conditions ordinaires de température. De préférence, le sel hydratable est un sel dont un hydrate présente une température de fusion comprise entre 15 et 35 °C. Plus particulièrement préférées sont les formes hydratables du carbonate de sodium, du sulfate de sodium et du chlorure de calcium. De bons résultats ont été obtenus avec le chlorure de calcium anhydre, monohydraté ou dihydraté. Le chlorure de calcium industriel, constitué de monohydrate et de dihydrate, est tout particulièrement préféré.

Les particules du sel hydratable présentent, de préférence, un diamètre moyen inférieur à 0,5 mm, les meilleurs résultats étant obtenus lorsque le diamètre moyen est compris entre 0,5 et 0,3 mm. Lorsque le sel hydratable est le chlorure de calcium industriel, il se présente initialement sous la forme de paillettes qu'il suffit de broyer pour obtenir des particules de diamètre moyen convenable ou encore sous la forme de poussières produites dans l'installation de fabrication des paillettes, qui ont déjà les dimensions adéquates.

La poudre stabilisante peut être constituée de n'importe quel matériau pulvérulent dans les conditions ordinaires capable d'éviter le phénomène de non-congruence lors des cycles de fusion et solidification des compositions. En effet, si la solubilité du sel hydraté dans l'eau aux températures supérieures à la température de fusion du sel hydraté est supérieure à la proportion de sel anhydre dans l'hydrate, il n'apparaît aucun précipité dans la phase liquide lors de la fusion et celle-ci est dite congruente. Dans le cas contraire, celui de la non-congruence, un précipité se forme qui, ultérieurement, ralentit les phénomènes de cristallisation et donc la vitesse de restitution des calories.

La poudre stabilisante peut être de natures diverses : ce peut être notamment une terre de diatomées, une argile thixotropique telle que la sépiolite, l'attapulgite ou la polygorskite, une asbeste, un gypse aciculaire ou une tourbe. En général, la poudre stabilisante est constituée de particules, pouvant avoir des formes diverses, dont la plus grande dimension moyenne est inférieure à 1 mm et, de préférence, à 0,3 mm. De préférence, la poudre stabilisante est un mélange de diatomites ayant un indice de vide supérieur à 5 et, encore de préférence, supérieur à 10, tel que décrit dans la demande de brevet FR-A-2 457 230 précitée. De bons résultats ont été obtenus avec de tels mélanges de diatomites contenant au moins 50 % et, de préférence, au moins 75 % en poids de diatomites aciculaires ayant une largeur moyenne comprise entre 0,000 05 et 0,02 mm et une longueur moyenne comprise entre 0,0002 et 0,2 mm et égale à au moins dix fois la largeur moyenne. Ces mélanges peuvent être des mélanges naturels utilisés tels quels ou bien ayant subi un séchage ou un broyage.

La quantité de poudre stabilisante est comprise en général entre 2 et 30 % et, de préférence, entre 5 et 20 % en poids du sel hydratable.

Dans le cas, le mélange est prêt à l'emploi car il ne faut plus y ajouter que de l'eau pour obtenir la composition. Cependant, il n'est pas exclu de mettre en œuvre des quantités relatives plus élevées de poudre stabilisante, par exemple si du sel est rajouté au moment de la préparation de la composition.

Le mélange selon l'invention peut encore contenir un agent nucléant favorisant la cristallisation du sel hydraté. Des agents nucléants particulièrement efficaces sont l'hydroxyde de calcium et les carbonates, chlorures et fluorures de baryum et de strontium, hydratés ou non. De bons résultats ont été obtenus avec le chlorure de strontium. L'agent nucléant peut être ajouté au mélange sous forme de particules. Dans ce cas, les particules présentent, de préférence, un diamètre moyen inférieur à 1 mm et, de préférence, à 0,5 mm. En général, l'agent nucléant représente moins de 10 % et, de préférence, moins de 5 % du poids du mélange. Il est à remarquer que l'utilisation comme sel de chlorure de calcium industriel présente l'avantage que celui-ci contient du chlorure de strontium comme impureté.

Le mélange selon l'invention, qui peut être obtenu par tout moyen connu et notamment sur un mélangeur à pales, se présente sous la forme d'une masse de nature poudreuse qui peut être manipulée par toutes les techniques utilisables pour la manipulation des matériaux pulvérulents.

Pour son transport sur les sites d'exploitation, le mélange selon l'invention est d'habitude introduit dans des réservoirs ou dans des emballages secs étanches à l'humidité en vue d'éviter toute hydratation même partielle du sel hydratable entrant dans sa composition. A cet effet, on peut notamment utiliser des sacs ou des poches réalisés en matière plastique imperméable à l'eau et à la vapeur d'eau. Il a en outre été constaté que les manipulations et les transports du mélange selon l'invention n'altèrent pas son homogénéité par ségrégation gravimétrique de ses constituants. Il a par contre été constaté que si on réalise un mélange, homogène initialement, comprenant des paillettes de chlorure de calcium industriel et un mélange de diatomites, ce mélange perd son homogénéité au cours des manipulations et des transports.

Lors de la mise en œuvre du mélange sur le site d'exploitation, il suffit d'y incorporer la quantité d'eau nécessaire pour faire passer le sel hydratable à l'état du sel hydraté souhaité. Ainsi, lorsque le mélange comprend du chlorure de calcium anhydre ou du chlorure de calcium industriel, il convient d'y introduire la quantité d'eau nécessaire pour transformer la totalité du chlorure de calcium en chlorure de calcium hexahydraté.

Pour cette opération, il est avantageux de brasser la composition, par exemple dans un mélangeur, et il peut être utile d'employer de l'eau portée à une température supérieure à celle de fusion du sel hydraté pour éviter la cristallisation de l'hydrate formé et portant une prise en masse de la composition. La composition pâteuse ainsi obtenue peut alors être introduite directement dans les unités d'absorption et d'accumulation de calories telles que les installations de récupération et de stockage d'énergie solaire.

Le mélange selon l'invention est en outre explicité par les exemples de réalisation pratique qui vont suivre.

Exemple 1

Des paillettes de chlorure de calcium industriel produites et commercialisées par la Demanderesse sont traitées dans un broyeur à marteaux du type FORPLEX jusqu'à obtention d'une poudre dont la fraction des grains dont le diamètre est compris entre 0,250 et 0,02 mm soit de 90 % en poids, le diamètre moyen étant de 0,075 mm.

La composition chimique de la poudre est la suivante :
$CaCl_2$ : 77 % en poids ;
NaCl et autres impuretés : 3 % en poids ;
eau de cristallisation : 20 % en poids.

Dans un mélangeur à pales de type LOEDIGE, on introduit 798 kg de la poudre obtenue après broyage, 14,4 kg de chlorure de strontium hexahydraté qualité pour analyse produit et commercialisé par RIEDEL-DE HAEN AG sous la référence 054215 et 187,6 kg d'une terre de diatomées contenant 10 % en poids d'eau produite et vendue par JOHN MANSVILLE CORP. Cette terre de diatomées contient 80 % en poids de diatomites de type Synedras, présente un indice de vide de 6,2 et est constituée de particules dont la fraction ayant un diamètre compris entre 0,000 1 et 0,01 mm est de 90 % en poids.

Après 15 minutes, on obtient ainsi une tonne de mélange sec pulvérulent et homogène.

Pour préparer la composition sur le site d'exploitation, on ajoute au mélange 420 g d'eau par kg de mélange, cette eau étant préalablement portée à une température d'au moins 30 °C. La composition pâteuse peut être préparée directement dans les unités d'absorption et d'accumulation de calories ou encore y être introduite après sa préparation.

Exemple 2

On récupère de la poussière produite lors de la fabrication industrielle — de paillettes de chlorure de calcium. Les grains constituant cette poussière ont un diamètre moyen de 0,25 mm et la fraction des grains dont le diamètre est compris entre 0,04 et 0,6 mm est de 90 % en poids.

La poussière présente la composition chimique suivante :
$CaCl_2$ : 82 % en poids ;
NaCl et autres impuretés : 3 % en poids ;

eau de cristallisation : 15 % en poids.

Dans un mélangeur à pales de type LOEDIGE, on introduit 746 kg de la poussière, 14 kg de chlorure de strontium hexahydraté du type utilisé à l'exemple 1 et 240 kg d'argile fibrillaire contenant 10 % en poids d'eau. L'argile fibrillaire utilisé est de la sépiolite micronisée à sec produite et vendue sous la dénomination commerciale « MAGNOSIL » par JOHN MANSVILLE CORP.

Après 15 minutes, on obtient ainsi une tonne de mélange sec pulvérulent et homogène.

Pour préparer la composition sur le site d'exploitation, on ajoute 405 g d'eau par kg de mélange, cette eau étant préalablement portée à une température d'au moins 30 °C.

**Revendications**

1. Mélange pour la préparation de compositions pour l'absorption et l'accumulation de calories qui comprennent un sel hydraté et une poudre stabilisante caractérisé en ce que le mélange contient des particules du sel se trouvant sous une forme hydratable du carbonate de sodium, du sulfate de sodium ou du chlorure de calcium présentant un diamètre moyen inférieur à 1 mm ainsi que la poudre stabilisante.

2. Mélange selon la revendication 1 caractérisé en ce que le sel hydratable est du chlorure de calcium anhydre, monohydraté ou dihydraté.

3. Mélange selon la revendication 2 caractérisé en ce que le chlorure de calcium est du chlorure de calcium industriel.

4. Mélange selon l'une quelconque des revendications 1 à 3 caractérisé en ce que les particules du sel hydratable présentent un diamètre moyen compris entre 0,05 et 0,3 mm.

5. Mélange selon l'une quelconque des revendications 1 à 4 caractérisé en ce que la poudre stabilisante est un mélange de diatomites ayant un indice de vide supérieur à 5.

6. Mélange selon la revendication 5 caractérisé en ce que le mélange de diatomites contient au moins 50 % en poids de diatomites aciculaires ayant une largeur moyenne comprise entre 0,000 05 et 0,02 mm et une longueur moyenne comprise entre 0,000 2 et 0,2 mm et égale à au moins dix fois la largeur moyenne.

7. Mélange selon l'une quelconque des revendications 1 à 6 caractérisé en ce que le mélange contient de la poudre stabilisante à raison de 2 à 30 % en poids du mélange.

8. Mélange selon l'une quelconque des revendications 1 à 7 caractérisé en ce que le mélange contient en outre un agent nucléant à raison de moins de 10 % en poids du mélange.

9. Mélange selon la revendication 8 caractérisé en ce que l'agent nucléant est du chlorure de strontium hexahydraté sous forme de particules.

**Claims**

1. Mixture for the preparation of compositions for the absorption and storage of heat, which comprise a hydrated salt and a stabilising powder, characterised in that the mixture contains particles of salt in a hydratable form of sodium carbonate, of sodium sulphate or of calcium chloride, having a mean diameter of less than 1 mm, together with the stabilising powder.

2. Mixture according to Claim 1, characterised in that the hydratable salt is anhydrous calcium chloride or calcium chloride monohydrate or dihydrate.

3. Mixture according to Claim 2, characterised in that the calcium chloride is industrial calcium chloride.

4. Mixture according to any one of Claims 1 to 3, characterised in that the particles of the hydratable salt have a mean diameter of between 0.05 and 0.3 mm.

5. Mixture according to any one of Claims 1 to 4, characterised in that the stabilising powder is a mixture of diatomites having a void index of greater than 5.

6. Mixture according to Claim 5, characterised in that the mixture of diatomites contains at least 50 % by weight of acicular diatomites having a mean width of between 0.000 05 and 0.02 mm and a mean length length of between 0.000 02 and 0.2 mm and equal to at least ten times the mean width.

7. Mixture according to any one of Claims 1 to 6, characterised in that the mixture contains the stabilising powder, in an amount of 2 to 30 % by weight of the mixture.

8. Mixture according to any one of Claims 1 to 7, characterised in that the mixture moreover contains a nucleating agent in an amount of less than 10 % by weight of the mixture.

9. Mixture according to Claim 8, characterised in that the nucleating agent is strontium chloride hexahydrate in the form of particles.

**Patentansprüche**

1. Mischung für die Herstellung von Zusammensetzungen für die Absorption und die Speicherung von Kalorien, die ein hydratisiertes Salz und ein stabilisierendes Pulver enthalten, dadurch gekennzeichnet, daß die Mischung Partikel des Salzes enthält, die sich in einer hydratisierbaren Form von Natriumkarbonat, Natriumsulfat oder Kalziumchlorid befinden und die einen mittleren Durchmesser kleiner als 1 mm besitzen ebenso wie das stabilisierende Pulver.

2. Mischung nach Anspruch 1, dadurch gekennzeichnet, daß das hydratisierbare Salz wasserfreies, monohydratisiertes oder dihydratisiertes Kalziumchlorid ist.

3. Mischung nach Anspruch 2, dadurch gekennzeichnet, daß das Kalziumchlorid industrielles Kalziumchlorid ist.

4. Mischung nach irgendeinem der Ansprüche 1-3, dadurch gekennzeichnet, daß die Partikel des hydratisierbaren Salzes einen mittleren Durchmesser im Bereich zwischen 0,05 und 0,3 mm besitzen.

5. Mischung nach irgendeinem der Ansprüche 1-4, dadurch gekennzeichnet, daß das stabilisierende Pulver eine Mischung von Diatomiten einem mit ein Hohlraumindex größer als 5 ist.

6. Mischung nach Anspruch 5, dadurch gekennzeichnet, daß die Mischung der Diatomite mindestens 50 Gew.-% nadelförmige Diatomite mit einer mittleren Dicke zwischen 0,000 05 und 0,02 mm und einer mittleren Länge zwischen 0,000 2 und 0,2 mm und gleich mindestens dem Zehnfachen der mittleren Dicke enthält.

7. Mischung nach irgendeinem der Ansprüche 1-6, dadurch gekennzeichnet, daß die Mischung stabilisierendes Pulver in der Größenordnung von 2-30 Gew.-% der Mischung enthält.

8. Mischung nach irgendeinem der Ansprüche 1-7, dadurch gekennzeichnet, daß die Mischung ferner ein keimbildendes Mittel in der Größenordnung von mindestens 10 Gew.-% der Mischung enthält.

9. Mischung nach Anspruch 8, dadurch gekennzeichnet, daß das keimbildende Mittel hexahydratisiertes Strontiumchlorid in der Form von Partikeln ist.